# EUROPÄISCHE PATENTSCHRIFT

(11) **EP 2 102 295 B1**
(45) Veröffentlichungstag und Bekanntmachung des Hinweises auf die Patenterteilung: **21.08.2019**
(21) Anmeldenummer: 07857504.0
(22) Anmeldetag: 12.12.2007
(51) Int. Cl.: C09D 5/00, C09D 151/00, C09D 187/00, C09D 201/00, C09K 3/18

(54) **PERMANENTE BESCHICHTUNG VON OBERFLÄCHEN ZUR BE- UND/ODER VERHINDERUNG DES VEREISENS UND VERWENDUNG DAFÜR**
PERMANENT COATING OF SURFACES FOR INHIBITING AND/OR PREVENTING THEM FROM ICING UP, AND USE FOR THAT PURPOSE
REVÊTEMENT PERMANENT DE SURFACES POUR GÊNER ET/OU EMPÊCHER LA FORMATION DE GIVRE ET UTILISATION DE CE REVÊTEMENT

(30) Priorität: 13.12.2006 DE 102006060340
(43) Veröffentlichungstag der Anmeldung: 23.09.2009
(73) Patentinhaber: Leibniz-Institut für Polymerforschung Dresden e.V., 01069 Dresden (DE)
(72) Erfinder: SIMON, Frank, 01099 Dresden (DE); STAMM, Manfred, 01705 Freital (DE); KRETSCHMER, Katja, 02894 Reichenbach (DE); UHLMANN, Petra, 01326 Dresden (DE); FRENZEL, Ralf, 01189 Dresden (DE)
(74) Vertreter: Rauschenbach, Marion
(86) Internationale Anmeldenummer: PCT/EP2007/063852
(87) Internationale Veröffentlichungsnummer: WO 2008/071752

(56) Entgegenhaltungen:
- EP-A- 0 339 583
- US-A1- 2002 139 956
- D. POPESCU, R. LEMS, N. ROSSI, C.-T. YEOH, J. LOOS, S. HOLDER, C. BOUTEN, N. SOMMERDIJK: "The patterning and Alignement of Muscle Cells Using Selective Adhesion of Poly(ethylene glycol methyl ether methacrylate)-based ABA Block Copolymers" ADVANCED MATERIALS, Bd. 17, 2005, Seiten 2324-2329, XP002476668 Weinheim

## Beschreibung

Die Erfindung bezieht sich auf die Gebiete der Chemie und des Maschinenbaus, betrifft die Verwendung einer permanenten Beschichtung zur Be- und/oder Verhinderung des Vereisens, die eine Funktionalisierung der Oberflächen zur Vermeidung oder Verminderung von Eiswachstum auf dieser Oberfläche aufweisen, die beispielsweise eine Beschichtung auf der Oberfläche von Wärmetauschern, Klimageräten, Eismaschinen, Flugzeugtragflächen sein kann.

Das Ausrüsten von Oberflächen mit Beschichtungen, die bei einer Abkühlung der feuchten Umgebungsluft unter 0 °C ein Vereisen be- und/oder verhindern, ist nach dem Stand der Technik bekannt. In Anlehnung an bekannte Beispiele aus der Natur werden so genannte Anti-Freeze-Proteine zur Beeinflussung der Kristallbildung eingesetzt, damit ein Festsetzen von Eiskristallen an der Oberfläche unterbunden wird (K.V. Ewart, u.a.: Cell. Mol. Life Sci. 55 [1999] 271-283; M.M. Harding, u.a.: Eur. J. Biochem. 264 [1999] 653-665). Dieses Naturprinzip ist auch für technische Anwendungen einsetzbar, ist jedoch aufgrund seiner hohen Kosten für diese Proteine wenig praktikabel. Gemäß der WO 02 090 459 wird versucht, einen Aspekt der Wirkungsweise von Anti-Freeze-Proteinen durch eine heterogene Oberfläche mit mindestens zwei chemisch und physikalisch unterschiedlichen Komponenten, die regelmäßig oder statistisch verteilt sind, nachzustellen. Die entstehenden polaren Gebiete (Keimstellen für Eisbildung) mit hoher Oberflächenenergie werden von unpolaren Inseln niedrigerer Oberflächenenergie umgeben, wodurch das Ausbilden einer kompakten Eisschicht verhindert werden soll. Durch dieses Konzept wird das Enteisen der Oberfläche erleichtert, aber nicht verhindert.

Weiterhin bekannt ist das Prinzip der Gefrierpunkterniedrigung, bei dem Stoffe in einer Flüssigkeit gelöst werden und dadurch der Gefrierpunkt der Flüssigkeit abgesenkt wird (Tausalz-Effekt). Dabei kommt es nicht auf die Art der gelösten Stoffe an, sondern im Wesentlichen auf die in Lösung gebrachte Menge dieser Stoffe (K. Schwabe: Physikalische Chemie, Band 1, Akademie-Verlag, Berlin [1986] S. 341 ff).

Bekannt ist auch, dass geringe Anteile von gelösten Polymeren, wie z.B. Polyvinylalkohol (T. Inada, S.S. Lu: Cryst. Growth Des. 3 [2003] 747-752) oder niedermolekulare organische Verbindungen, wie z.B. Glycerol oder Diethylenglycolmonomethylether (A. Zeman: *Chemie der Kraft- und Schmierstoffe* unter http://www.unibw-muenchen.de/campus/MB/we6/zeman/kraftstoffe/zeman_kraf tstoffe.htm) den Gefrierpunkt von Wasser erheblich herabsetzen können. Die Anwendung von Diethylenglycolmonomethylether als gelöster Vereisungshemmstoff in Otto- und Flugturbinenkraftstoffen ist bekannt und wird vielfältig genutzt.

Weiterhin bekannt ist nach D. Popescu et al; Adv. Mater. 2005, 17, 2324-2329 eine Beschichtung auf einem teilweise mit Gold beschichteten Glassubstrat. Die Beschichtung besteht aus einem ABA-Block-Copolymer, welches Haupt- und Seitenketten in einer Kammstruktur aufweist, wobei sich die Seitenketten in Richtung von der Oberfläche weg organisieren. Dieses so beschichtete Glassubstrat wird mit einer Zelllösung in Kontakt gebracht und Zellen haften und wachsen an den nicht mit dem ABA-Block-Copolymer beschichteten Oberflächen.

Nach der US 2002/139956 ist eine Anti-Vereisungs-Zusammensetzung aus einer glasartigen Matrix aus einem Polymernetzwerk aus Glas und Silikon, die durch Vernetzen einer Mischung aus einem funktionalisierten Silikon und einem Alkoxyfunktionalisierten Siloxan durch Mikrophasentrennung hergestellt worden ist, bekannt.

Gemäß der EP 0 339 583 ist eine Anti-Vereisungs-Zusammensetzung bekannt, Diese Zusammensetzung besteht aus (a) einem Hydroxylgruppen enthaltendem Copolymer oder einem Copolymer, das neben Hydroxylgruppen eine andere reaktive Gruppe enthält, (b) eine Siliconverbindung, und (c) eine Polyisocyanatverbindung.

Nachteilig bei den bekannten Lösungen zur Be- und/oder Verhinderung des Vereisens von Oberflächen ist, dass bisher keine permanenten Beschichtungen erreicht werden konnten, die dauerhaft ein Be- und/oder Vereisen der Oberfläche verhindern.

Die Aufgabe der vorliegenden Lösung ist es, die Verwendung einer permanenten Beschichtung von Oberflächen zur Be- und/oder Verhinderung des Vereisens anzugeben, die dauerhaft ist und zuverlässig ein Vereisen der Oberfläche be- und/oder verhindert.

Die Aufgabe wird durch die in den Ansprüchen angegebene Erfindung gelöst. Vorteilhafte Ausgestaltungen sind Gegenstand der Unteransprüche.

Bei den erfindungsgemäßen Verwendung einer permanenten Beschichtung aus Polymeren mit Haupt- und Seitenketten, wobei die Polymerhauptketten hydrophob und die Seitenketten hydrophil sind und die Polymerhauptketten mit der zu beschichtenden Oberfläche eine chemische und/oder chemisch-koordinative und/oder physikalische Wechselwirkung eingegangen sind und die Seitenketten im Wesentlichen in Richtung von der Oberfläche weg an der Polymerhauptkette angeordnet sind und miteinander zumindest keine dauerhafte Wechselwirkung eingehen, wobei die hydrophobe Polymerhauptkette die Kammrückseite und die hydrophilen Seitenketten die Kammzinken einer kammartigen Struktur bilden, zur Be- und/oder Verhinderung des Vereisens der beschichteten Oberflächen bis Umgebungstemperaturen von -10 °C.

Vorteilhafterweise wird die Beschichtung zum Beschichten von Metalloberflächen oder Glasoberflächen verwendet.

Weiterhin vorteilhafterweise erfolgt die Verwendung einer Beschichtung aus Methacrylatcopolymeren mit Poly-(ethylenglycol)-Seitenketten, deren mittlere Molmasse Mₙ zwischen 100 und 10000 beträgt, besteht.

Mit der erfindungsgemäßen Lösung ist die Verwendung einer einfachen und kostengünstigen Beschichtung von Oberflächen möglich, die dauerhaft und zuverlässig das Vereisen der Oberflächen be- und/oder verhindert.
Dies erfolgt durch die spezielle Struktur der Polymere, die die Beschichtung bilden. Die partiell wasserlöslichen Polymere haben eine Polymerhauptkette, an die eine Vielzahl von hydrophilen Seitenketten gebunden ist. Dabei weisen die Seitenketten nach Applikation des Polymers auf einer Oberfläche alle im Wesentlichen in eine Richtung weg von der Hauptkette und weg von der Oberfläche. Es liegt eine kammartige Struktur der Polymere vor. Bei der Beschichtung erfolgt eine Anbindung der Polymerhauptketten über chemische und/oder chemisch-koordinative und/oder physikalische Wechselwirkungen an die Oberfläche. Dadurch werden die Polymermoleküle dauerhaft an der Oberfläche fixiert. Die in Analogie zu den Kammzinken angeordneten Seitenketten weisen - wie oben beschrieben - alle von der Oberfläche weg und sind im Wesentlichen im Raum nahe der Oberfläche frei beweglich. Dabei gehen sie keine dauerhafte Wechselwirkung mit den benachbarten Seitenketten ein.
Sobald die beschichtete Oberfläche mit Wasser oder feuchter Luft in Kontakt kommt, werden die freistehenden hydrophilen Seitenketten solvatisiert, so dass direkt oberhalb der Polymerhauptketten, d.h. im Bereich des Grenzschichtbereichs fest/flüssig oder fest/gasförmig das Wasser auch nach Unterschreiten einer Temperatur von 0 °C bis - 10 °C noch flüssig bleibt oder eine Luftschicht vorhanden ist, während im Bereich weiter weg von der Oberfläche eine Eisbildung stattfinden kann. Aufgrund dieses geringen Flüssigkeits- oder Luftfilmes im Grenzschichtbereich fest/flüssig oder fest/gasförmig kann auch bereits gebildetes Eis nicht auf der Oberfläche haften, wird abfallen oder kann leicht entfernt werden, beispielsweise mit der strömenden Flüssigkeit oder strömender Luft.

Das erfindungsgemäße Prinzip funktioniert nur, wenn die Umgebungstemperatur -10 °C nicht unterschreitet, da sonst auch die länger flüssig bleibende Wasserschicht oder die noch vorhandene Feuchtigkeit in der Luftschicht direkt über den Polymerhauptketten, d.h. im Grenzschichtbereich fest/flüssig oder fest/gasförmig gefriert und damit nicht mehr die erfindungsgemäße Funktion erfüllen kann.

Die erfindungsgemäße Beschichtung kann qualitativ noch durch den Einsatz von kristallisationsbeeinflussenden funktionellen Gruppen verbessert werden, die an der Polymerhauptkette oder den Seitenketten gebunden vorliegen, und das Eiskristallwachstum erschweren.

Der Unterscheid der vorliegenden Lösung zu Lösungen des Standes der Technik besteht im Wesentlichen darin, dass die Nutzung der bekannten Effekte in einem anderen chemisch/physikalischen Umfeld realisiert wird, was bisher nach dem Stand der Technik nicht realisiert ist.
Nach dem Stand der Technik liegt das den jeweiligen gefrierpunkterniedrigenden Effekt bewirkende Agens immer in gelöster Form vor.
Nach der erfindungsgemäßen Lösung ist das Agens, welches die Gefrierpunkterniedrigung auslöst, in Form von Molekülen oder Molekülionen fest an eine feste Oberfläche gebunden. Eine freie Beweglichkeit der Moleküle oder Molekülionen weg von dieser ist demnach nicht gegeben.

Nachfolgend wird die Erfindung an einem Ausführungsbeispiel näher erläutert.

### Beispiel 1

Kupferfolie (Probenstücke 50 x 80 x 0,5 mm³) wird mit Wasserstoffperoxidlösung im Ultraschallbad (10 min) gereinigt, anschließend mit Ethanol gespült und im Argonstrom getrocknet. Für die Beschichtung wird ein statistisches Copolymer aus Dimethylaminoethylmethacrylat (DMEMA) und Poly[(ethylen-glycolmonomethylether)]methacrylat verwendet (PDMAEMA-graft-PEG-2.080, 5:1). Das Beschichten erfolgt mittels Aufschleudern (Spin-coating) einer Polymerlösung in einer 10-%igen Ethanollösung. Nicht an der Metalloberfläche gebundenes Polymer wird durch Extraktion mit destilliertem Wasser (4 Tage) entfernt. Die über Nacht im Vakuum getrockneten Proben werden einem Bereifungstest unterzogen [Thermostat -15 °C, 88 % relative Luftfeuchte, Lufttemperatur +1 °C, Substrattemperatur -10 bis -12 °C, 20 min Bereifung bei 9 m/s (32,4 km/h), 5 min Ablösen bei 23 m/s (82,8 km/h)]. Es bildete sich eine Reifschicht von ca. 250 µm Dicke aus, während eine unbeschichtete Vergleichsprobe eine Reifschicht von ca. 650 µm aufweist.
Die 250 µm dicke Reifschicht lässt sich per Hand einfach entfernen. Die Beschichtung der Kupferfolie ist stabil. Auch bei einer Lagerung der Proben unter Feuchteeinwirkung über mehrere Wochen wurde kein Abklingen des Effekts beobachtet.

## Patentansprüche

1. Verwendung einer permanenten Beschichtung von Oberflächen, bei der die Beschichtung aus Polymeren mit Haupt- und Seitenketten besteht, wobei die Polymerhauptketten hydrophob und die Seitenketten hydrophil sind und die Polymerhauptketten mit der zu beschichtenden Oberfläche eine chemische und/oder chemisch-koordinative und/oder physikalische Wechselwirkung eingegangen sind und die Seitenketten im Wesentlichen in Richtung von der Oberfläche weg an der Polymerhauptkette angeordnet sind und miteinander zumindest keine dauerhafte Wechselwirkung eingehen, wobei die hydrophobe Polymerhauptkette die Kammrückseite und die hydrophilen Seitenketten die Kammzinken einer kammartigen Struktur bilden, zur Be- und/oder Verhinderung des Vereisens der beschichteten Oberflächen bis Umgebungstemperaturen von - 10 °C.

2. Verwendung nach Anspruch 1, zur Beschichtung von Metalloberflächen oder Glasoberflächen.

3. Verwendung nach Anspruch 1, einer Beschichtung aus Methacrylatcopolymeren mit Poly-(ethylenglycol)-Seitenketten, deren mittlere Molmasse Mₙ zwischen 100 und 10000 beträgt..

## Claims

1. Use of a permanent coating of surfaces where the coating consists of polymers having main chains and side chains, wherein the polymer main chains are hydrophobic and the side chains are hydrophilic and the polymer main chains have entered into chemical and/or chemical-coordinative and/or physical interaction with the surface to be coated and the side chains are disposed on the polymer main chain substantially in a direction away from the surface and at least do not enter into a permanent interaction with one another, wherein the hydrophobic polymer main chain forms the comb backside and the hydrophilic side chains form the comb prongs of a comb-like structure, for inhibiting and/or preventing icing of the coated surfaces down to ambient temperatures of -10°C.

2. Use according to Claim 1 for coating metal surfaces or glass surfaces.

3. Use according to Claim 1 of a coating composed of methacrylate copolymers having polyethylene glycol side chains whose average molar mass Mn is between 100 and 10 000.

## Revendications

1. Utilisation d'un revêtement permanent de surfaces, le revêtement étant constitué par des polymères contenant des chaînes principales et latérales, les chaînes principales des polymères étant hydrophobes et les chaînes latérales étant hydrophiles, et les chaînes principales des polymères entrant en interaction chimique et/ou chimique coordinative et/ou physique avec la surface à revêtir, et les chaînes latérales étant agencées sur la chaîne principale des polymères, essentiellement dans une direction qui s'éloigne de la surface, et n'entrant au moins pas en interaction durable les unes avec les autres, la chaîne principale hydrophobe des polymères formant le côté arrière d'un peigne et les chaînes latérales hydrophiles formant les dents d'une structure en peigne, pour empêcher et/ou éviter le givrage des surfaces revêtues jusqu'à des températures ambiantes de -10 °C.

2. Utilisation selon la revendication 1, pour le revêtement de surfaces métalliques ou de surfaces en verre.

3. Utilisation selon la revendication 1, d'un revêtement en copolymères de méthacrylate contenant des chaînes latérales poly(éthylène glycol), dont la masse molaire moyenne Mₙ est comprise entre 100 et 10 000.
